Europäisches Patentamt

European Patent Office

Office européen des brevets

(11) Publication number: **0 273 897**
A2

# EUROPEAN PATENT APPLICATION

(21) Application number: 87870206.7

(22) Date of filing: 29.12.87

(51) Int. Cl.⁴: **B 29 C 49/22**
B 29 C 49/00

(30) Priority: 30.12.86 GB 8631014

(43) Date of publication of application:
06.07.88 Bulletin 88/27

(84) Designated Contracting States:
AT BE CH DE ES FR GB GR IT LI LU NL SE

(71) Applicant: Monsanto Europe S.A.
Avenue de Tervuren 270-272 Letter Box 1
B-1150 Brussels (BE)

(72) Inventor: Dufour, Daniel Louis
Avenue des Statuaires 109
B-1180 Brussels (BE)

Pierre, Jean R.
Rue des Trois Bonniers 13
B-5851 Saint Denis (BE)

Mayrhofer, Peter
Snijdersdreef 19
B-1900 Overijse (BE)

(74) Representative: McLean, Peter et al
Monsanto Europe S.A. Patent Department Avenue de
Tervuren 270-272 Letter Box No 1
B-1150 Brussels (BE)

(54) Hollow containers.

(57) Blow-moulded hollow containers having walls of high stiffness and low percentage elongation. These are made from a preform injection-moulded from a blend of polyethylene terephthalate (PET) and 5-40% styrene maleic anhydride SMA using a cooled mould, the preform being reheated and expanded, at the same time orientating the PET.

The container walls comprise an orientated crystalline PET matrix having discrete ovoid particles of SMA dispersed therein.

EP 0 273 897 A2

**Description**

## HOLLOW CONTAINERS

This invention relates to hollow containers, and particularly to hollow containers of polyethylene terephthalate (PET) made by blow-moulding.

Polyethylene terephthalate blow-moulded containers, for example bottles, are widely used, particularly for holding carbonated beverages and other drinks, foods, cosmetics and other liquid and semi-liquid materials.

A new PET container has now been developed whose walls have a unique micro structure giving physical properties that render the container particularly suitable for use with liquefied aerosol propellant gases or cigarette lighter fuels. In particular, the walls of the container have a low permeability towards gases and an excellent resistance to creep under load.

The invention comprises a blow-moulded hollow container having walls composed of polyethylene terephthalate (PET), characterised by the walls comprising an orientated crystalline continuous matrix of PET having dispersed therein discrete ovoid particles of diameter 0.1 to 0.8 um and length 0.3 to 2 um, the particles being composed of copolymer of styrene and maleic anhydride (SMA) and the weight of SMA being from 5 to 40 % of the total weight of PET + SMA, whereby the walls have a relative stiffness of at least 1.5 times that of oriented PET and a percent elongation of not more than one-third that of oriented PET.

The invention also comprises a process for the production of a container according to the invention, which comprises blending a copolymer of styrene and maleic anhydride (SMA) with polyethylene terephthalate (PET), in an amount corresponding to 5 to 40% of the total PET + SMA, injection moulding the resulting blend using a cooled mould to make a hollow preform, reheating the preform and expanding it into the shape of the container, at the same time orientating the PET.

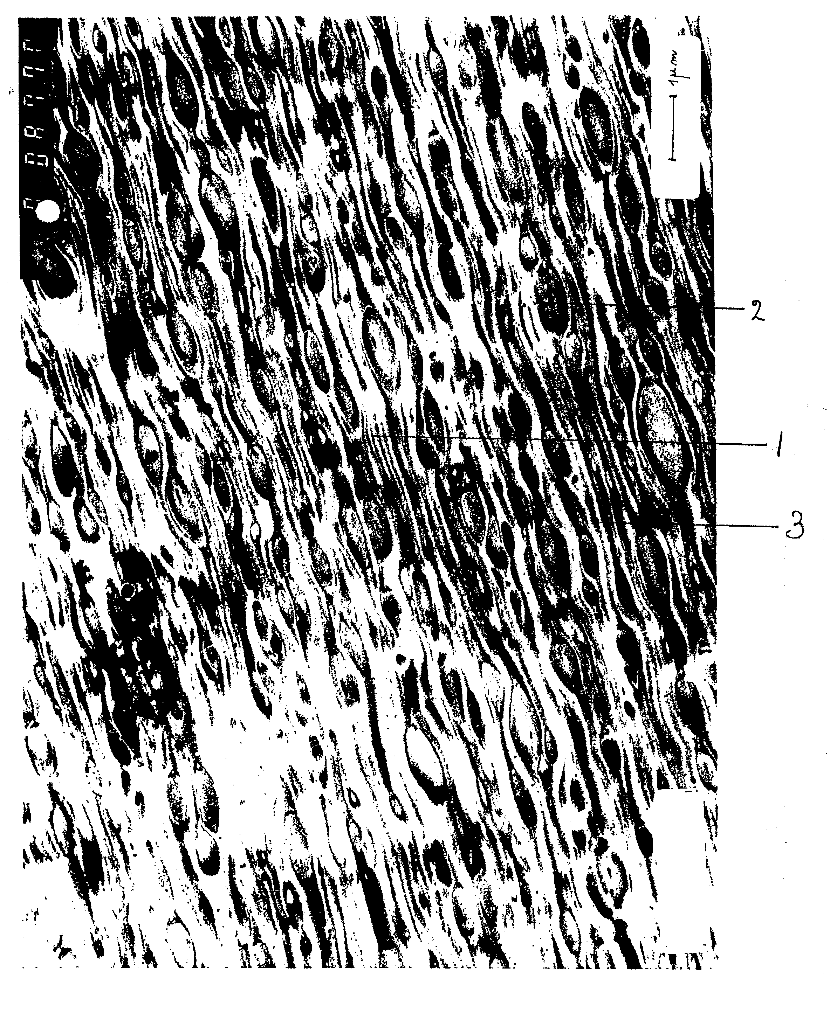

The accompanying drawing Figure 1, is an electron microscope photograph showing the microstructure of the material of walls of containers according to the invention.

Referring to Figure 1, the area designated (1) is constituted by a continuous matrix of PET in which are dispersed particles, (2), of SMA. The particles are ovoid in shape, as shown. The striations (3) are orientated crystallites of PET.

The PET can be any of the PET resins sold for blow-moulding. Suitable examples are for example described in US-A-4,483,949.

The SMA preferably contains from 10 to 30% by weight of maleic anhydride, based on the weight of the SMA. A preferred proportion is from 15 to 30% by weight. An additional copolymerised monomer, for example methyl methacrylate (MMA) can be present if desired in a weight proportion up to 14% of the copolymer. The styrene can be partially or totally replaced by a derivative of styrene such as alpha-methylstyrene, vinyltoluene or a halostyrene.

Rubber-modification of the SMA is not normally necessary. The amount of SMA in the container walls is preferably from 15 to 30% of the (PET + SMA).

The components of the composition can be blended together by a convenient method, for example by extrusion blending or by dry blending of particles. Additives such as colouring agents, antioxidants or lubricants can be incorporated.

It is surprising that the walls of containers according to the invention have such a high creep resistance. Creep resistance is a measure of the ability of the container to withstand long-term stresses, in the present application, such stresses result from highly pressurised liquefied gases such as aerosol propellant or lighter fuel. The pressures, and consequently the wall stresses, exerted by such liquefied gases are much higher than those exerted by the carbon dioxide in carbonated beverages such as are commonly marketed in PET bottles.

It is believed that the ability to contain liquefied gases without creep is in some way a consequence of the physical microstructure of the container walls. There may also be some chemical interaction between the SMA and the PET.

The containers of the invention have other unexpected but desirable properties. For example, their gas permeability is remarkably low, their rigidity is excellent and they can if desired be subjected to elevated temperatures (e.g. 80° to 85°C) without substantial deformation. The material of their walls has a tensile strength and impact strength commensurate with that of oriented PET and its elongation at break is much lower.

Because of the microstructure of the walls, they are not transparent; although they are not opaque in the sense of preventing all light transmission, it is nevertheless impossible to see through them, a state of affairs that is often referred to as "opacity". For use as an aerosol can container, this opacity is in fact commercially desirable because, such containers having been traditionally made of metal, the public is accustomed to using opaque ones.

The invention is illustrated by the following Examples :

## EXAMPLE I

Two-step stretch injection blow moulding of 1.5 litre bottles from dry blends of PET/SMA.

Dry blends of 80% PET Melinar B90S (intrinsic viscosity 0.74) from ICI with 20% SMA terpolymer at 25% MA were prepared just before injection moulding. The PET was dried for one night at 170°C and the SMA was

2

dried for three hours at 90°C in a hopper drier.

a) Injection step
The blends were injected on a 200 ton Billion injection moulding machine using a two cavity mould (two preforms per shot) and a 45 mm - 20D screw.

Injection moulding conditions :
Barrel temperatures : Z1 = 250, Z2 = 250, Z3 = 250, Z4 = 255(°C)
Nozzle temperature : 280°C
Manifold hot runners temperature : 300°C
Screw speed : 75 rpm
Injection cycle : 29 sec.
Mould temperature : 8°C
Melt temperature : 250°C

Hazy preforms weighing about 50g were obtained.

b) Blow moulding step
Stretch blow moulding of cold moulded preforms was performed on a Sidel pilot scale machine equipped with a carousel of rotating stations : five stations for heating using infra-red lamps, one station for stabilisation, one for blowing and one for charging the sample. The samples were heated for 7 seconds at each station and the temperature of the preforms at the end of the heating cycle was around 110°C. White opaque 1 1/2 litre bottles were obtained. The characteristics of the bottles are summarized in the table and compared to oriented PET.

## EXAMPLE 2

Two-step stretch injection blow moulding of 500 ml bottles from preextruded PET/SMA blends.
A blend of 80% PET Melinar B90S (intrinsic viscosity 0.74) from ICI with 20% SMA terpolymer at 25% MMA was extruded in a Plaston extruder and pellets were obtained through a dicer.

Extrusion temperatures
Barrel : Z1 = 265, Z2 = 260, Z3 = 260, Z4 = 260 (°C)
Nozzle : 260°C
Screw speed : 60 rpm.

The pellets were first dried during one night at 60°C in an Unadyn drier, then for one hour at 80°C in the hopper drier of a Billion injection moulding machine.

a) Injection step
The blend was injected on a 200 ton Billion injection moulding machine equipped with a four cavities mould (four preforms per shot) and a 45mm/20D screw.

Injection moulding conditions
Barrel temperatures : Z1 = 260, Z2 = 260, Z3 = 260, Z4 = 260 (°C)
Nozzle temperature : 280°C
Manifold - hot runners temperature : 300°C
Screw speed : 95 rpm
Injection cycle : 29 sec
Mould temperature : 8°C
Melt temperature : 255°C.

There were obtained hazy preforms: 2 × 23g and 2 × 27g per shot.

b) Blow moulding step
Stretch blow moulding of cold moulded preforms was performed on a Sidel pilot scale machine equipped with a carousel of 8 rotating stations : five stations for heating using infra-red lamps, one station for stabilisation, one for blowing and one for charging the sample. The 23grs preforms were heated for 5 seconds at each station and the 27grs preforms required a 7 seconds heating time at each station for blowing. The temperatures of the preforms at the end of the heating cycles varied from 100 to 110°C. White opaque 500ml bottles were obtained. The characteristics of the bottles are summarized in the table and compared to oriented PET.

## EXAMPLE 3

One step injection blow moulding of 250ml bottles from dry blends of PET/SMA.

Dry blends of 80% PET Arnite D04-300 (intrinsic, viscosity 0.85) from Akzo Chemie with 20% SMA terpolymer at 25% MA were prepared just before injection moulding. The PET was received from Akzo in sealed bags ready to use while the SMA was dried for 3 hours at 70°C in a Somos hopper drier.

The blends were injected in a one step injection blow moulding machine Bekum SBM 315 E30. In this machine, the containers are produced in three stages :

1. a preform is produced in the injection mould
2. the preform is blown up into the finished article in a blow mould
3. the finished part is stripped off the core and ejected.

All three phases take place simultaneously on a horizontal rotary table in working stations located at a mutual angle of 120°C.

The blend was injected using the following conditions :

Barrel temperatures : Z1=270, Z2=270, Z3=280, Z4=280 (°C).

Nozzle temperatures : 290°C

Preform mould temperature : 10 to 25°C.

Core cooled with cooling air.

Bottle mould temperature : 15°C (cold water)

Injection time + cooling time = 5 seconds (4 bottles per minute) Melt temperature : 260°C.

The bottles obtained were white opaque in the body and semi-transparent in the neck.

## TABLE

### Properties of PET/SMA Blend containers
### PET : Melinar B90S (ICI)

| Container type | Oriented PET | Example 1 Oriented PET/SMA (1.5l) 80:20 | Example 2 Oriented PET/SMA (0.5l) 80:20 |
|---|---|---|---|
| % stretch | - | 7.5 | 10 |
| Weight | - | 53g | 23-27g |
| Clarity | excellent | opaque | opaque |
| Hot fill at 85°C | impossible | possible (<1% shrinkage) | possible (+/- 8% shrinkage) |
| Oxygen permeability factor (25°) $cc_z$mil/ 100in$^2$ day.Atm. | 5 | 4.6 | 4.8 |
| Impact (3 ft.drop) | pass | pass | pass |
| % crystal-linity(DSC) | +/- 20-25 | Complete (+/- 55) | Complete (+/- 55) |
| Tensile strength at fail (MPa) | 96 | - | 91 |
| Elongation % | 250 | - | 69 |

## Claims

1. A blow-moulded hollow container having walls composed of polyethylene terephthalate (PET), characterised by the walls comprising an orientated crystalline continuous matrix of PET having dispersed therein discrete ovoid particles of diameter 0.1 to 0.8 um and length 0.3 to 2 um, the particles being composed of copolymer of styrene and maleic anhydride (SMA) and the weight of SMA being from 5 to 40% of the total weight of PET + SMA, whereby the walls have a relative stiffnes of at least 1.5 times that of orientated PET and a percentage elongation not more than one-third that of orientated PET.

2. A container according to Claim 1, wherein the SMA contains 10 to 30% by weight of maleic anhydride, based on the weight of SMA.

3. A modification of a container according to Claim 1 or Claim 2, in which the styrene is wholly or partially replaced by alpha-methylstyrene, vinyltoluene or a halostyrene.

0 273 897

4. A container according to any of the preceding claims, in which the weight of SMA is from 15 to 30% of the total weight of PET + SMA.

5. A process for the production of a container according to the invention, which comprises blending a copolymer of styrene and maleic anhydride (SMA) with polyethylene terephthalate (PET) in an amount corresponding to 5 to 40% by weight of the total PET + SMA, injection moulding the resulting blend using a cooled mould to make a hollow preform, reheating the preform and expanding it into the shape of the container, at the same time orientating the PET.

6. A process according to Claim 5, wherein the SMA contains 10 to 30% by weight of maleic anhydride, based on the weight of the SMA.

7. A modification of a process according to either Claim 5 or Claim 6, in which the styrene is wholly or partially replaced by alpha-methylstyrene, vinyltoluene or a halostyrene.

8. A process according to any of Claims 5 to 7, in which the weight of SMA is from 15 to 30% of the total weight of PET + SMA.

6

R-803-EP

0273897

1 μm

2

1

3